# FASCICULE DE BREVET EUROPEEN

(11) **EP 2 543 090 B1**
(45) Date de publication et mention de la délivrance du brevet: **15.01.2014**
(21) Numéro de dépôt: 11703617.8
(22) Date de dépôt: 11.02.2011
(51) Int. Cl.: H01M 10/42, H01M 2/34, H01M 2/10

(54) **BATTERIE ET ENSEMBLE EQUIPEMENT ELECTRIQUE ET BATTERIE D'ALIMENTATION DE L'EQUIPEMENT**
BATTERIE UND ELEKTRISCHE GERÄTEANORNDUNG SOWIE BATTERIE FÜR DEN BETRIEB DES GERÄTS
BATTERY AND ELECTRIC APPARATUS ASSEMBLY AND BATTERY FOR POWERING THE APPARATUS

(30) Priorité: 05.03.2010 FR 1051633
(43) Date de publication de la demande: 09.01.2013
(73) Titulaire: SAGEM DEFENSE SECURITE, 92100 Boulogne Billancourt (FR)
(72) Inventeur: NOLLET, Michel, F-75015 Paris (FR)
(74) Mandataire: Lavialle, Bruno François Stéphane
(86) Numéro de dépôt international: PCT/EP2011/000661
(87) Numéro de publication internationale: WO 2011/107216

(56) Documents cités:
- US-A- 5 220 520
- US-A1- 2002 160 728
- US-A1- 2003 170 530
- US-A1- 2004 229 111
- US-A1- 2009 128 093

## Description

La présente invention concerne une batterie d'alimentation électrique et un ensemble équipement électrique et batterie d'alimentation de l'équipement. Par équipement électrique, on entend un équipement comportant au moins un composant fonctionnant à l'électricité tel qu'un composant électronique ou électrotechnique. Par batterie, on entend une pile primaire, c'est-à-dire non rechargeable, ou une pile secondaire, c'est-à-dire rechargeable, comportant un ou plusieurs éléments d'accumulation d'énergie électrique.

Il existe des batteries comportant un boîtier renfermant un ou plusieurs éléments d'accumulation d'énergie électrique, un connecteur de raccordement externe qui est relié par au moins deux conducteurs à chaque élément d'accumulation et qui débouche à l'extérieur du boîtier, et un circuit électronique qui est relié à chaque élément d'accumulation. Le circuit électronique assure la gestion du fonctionnement et de la sécurité de la batterie et peut fournir à l'équipement raccordé au connecteur et alimenté par la batterie des informations sur la batterie comme l'état de charge, la température... Le circuit électronique peut comporter un organe de détection de la présence d'un équipement électrique raccordé au connecteur. US 5220 520 décrit un équipement électrique comprenant un organe de détection de la mise en place ou pas d'une batterie.

Le connecteur de raccordement comprend une pluralité de contacts (à broches, à pointes, à plots, etc) reliés à l'élément d'accumulation soit directement soit via le circuit électronique. Les plots sont généralement recouverts d'une fine couche d'or (de platine, d'argent ou d'un autre métal ou alliage résistant à la corrosion et ayant de bonnes propriétés pour réaliser un contact électrique) pour assurer une parfaite conduction électrique.

Comme tout générateur électrique, les batteries sont très sensibles aux liaisons qui peuvent être établies accidentellement entre deux plots. Trois types de liaison sont possibles.

Une liaison par un élément électriquement conducteur de faible résistance comme une clé métallique ou le revêtement métallisé d'un emballage qui risque d'établir un court-circuit entraînant notamment : la décharge de la batterie, un arc électrique et une perturbation électromagnétique au moment de son établissement ou de sa rupture, une perturbation chimique pour certains couples électrochimiques (Li-Io, LiSoCl₂, LiMnO₂) ou un fort échauffement des batteries de faibles résistances internes (batteries LI-Io, NiCd, NiMh, PbSO₄ par exemple). L'arc électrique peut engendrer une détérioration de la couche d'or ou bien encore amorcer un incendie ou une déflagration en atmosphère combustible ou déflagrante.

Une liaison par un élément électriquement conducteur de plus forte résistance constituant une charge dissipant la puissance de la batterie sous forme d'effet joule et entraînant ainsi une décharge de la batterie et un échauffement important qui peut être dangereux (risque de brûlure ou d'incendie par exemple).

Une liaison ionique résultant de la présence d'eau (ou d'un autre électrolyte) recouvrant deux plots. Il en résulte un déchargement de la batterie et une électrolyse détériorant la couche d'or (ou d'un autre métal tel que ceux mentionnés ci-dessus) altérant ainsi la qualité de conduction des plots.

Pour éviter une telle liaison accidentelle de deux plots, il est connu d'associer au connecteur un capuchon s'ajustant de manière étanche sur le connecteur. De tels capuchons doivent être ôtés avant la mise en place de la batterie, compliquant les manipulations nécessaires à sa mise en place, notamment avec des gants, et risquent d'être perdus.

On notera que la décharge par électrolyse et la détérioration qui en résulte ne concernent pas que les plots de puissance (reliés au pôle + et au pôle - de la batterie via l'interrupteur statique du circuit de sécurité) mais également les autres plots, dès lors qu'ils sont sous tension. La détérioration électrolytique concerne donc notamment, sur la batterie, les plots de son organe de détection de présence de l'équipement. La raison en est que la détection de présence de l'équipement doit être possible même en l'absence de tension fournie par l'équipement. Il faut donc que ce soit l'organe de détection de l'équipement qui envoie depuis la batterie un minimum de tension à l'équipement, afin de mesurer le courant occasionné par la présence de l'équipement ou d'obtenir une réponse de l'équipement. Donc, sur la batterie, les plots de l'organe de détection de l'équipement sont sous tension également.

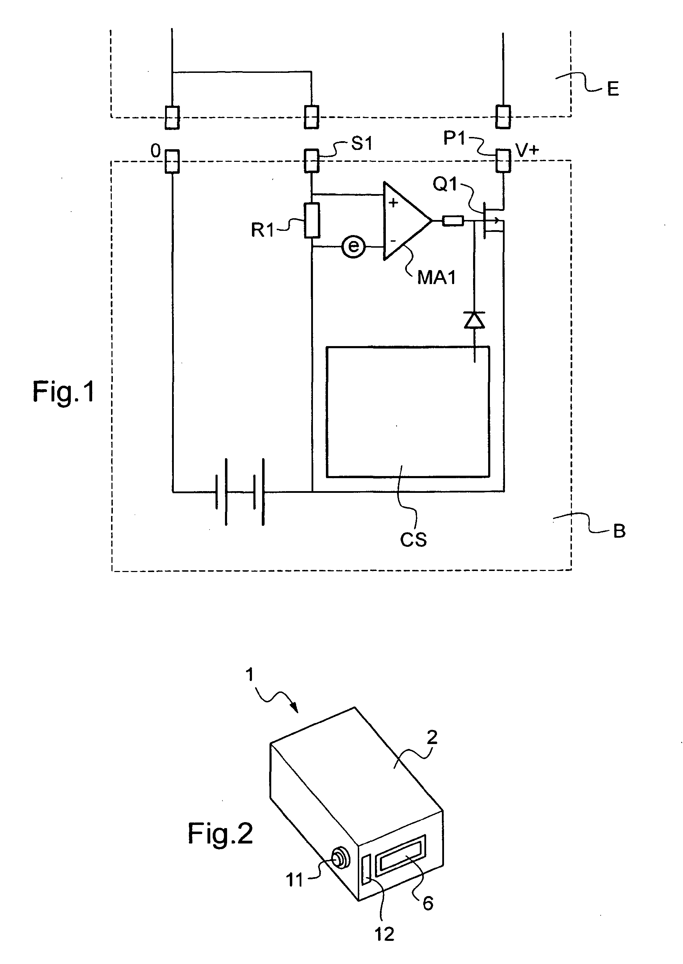

Une solution connue (voir la figure 1) consiste à réaliser la connexion d'au moins un plot de détection de présence S1, via une résistance interne R1 élevée afin de diminuer le courant d'électrolyse. Un comparateur MA1 branché aux bornes de la résistance commande un transistor Q1 reliant un des plots de puissance P1 à l'élément d'accumulation de la batterie B. Ce procédé a plusieurs inconvénients :
- il ne fait que ralentir la dégradation des plots puisqu'il diminue le courant d'électrolyse mais ne l'annule pas.
- il produit de fausses détections de présence d'équipements si son principe est la détection d'un courant passant par les plots correspondants de l'équipement E (fig. 1). En effet, la résistance interne étant élevée, la conduction par un peu d'eau ou d'humidité de surface, suffira à produire le courant de détection de l'équipement, même en l'absence d'équipement.
- il produira des lacunes de détection d'équipements si son principe est d'envoyer un signal électrique à l'équipement pour en attendre une réponse. En effet, la résistance interne étant élevée, la conduction par un peu d'eau ou d'humidité de surface, suffira à faire chuter la tension de sorte que l'équipement ne recevra pas suffisamment de signal pour envoyer sa réponse à la batterie.

Un but de l'invention est de fournir un moyen pour limiter le risque d'une décharge accidentelle de l'élément d'accumulation via une liaison électrique établie involontairement entre deux plots du connecteur.

A cet effet, on prévoit, selon l'invention, une batterie comportant un boîtier renfermant au moins un élément d'accumulation d'énergie électrique, un connecteur de raccordement externe qui est relié par au moins deux conducteurs à l'élément d'accumulation et qui débouche à l'extérieur du boîtier, et un circuit électronique qui est relié à l'élément d'accumulation et qui comporte un organe de détection d'un équipement électrique raccordé au connecteur. La batterie comporte au moins un commutateur monté sur un des conducteurs et un bouton monté sur le boîtier et accessible depuis l'extérieur de celui-ci, et le circuit électronique est agencé pour commander le commutateur dans un état passant lors d'un actionnement du bouton et tant qu'un équipement électrique est détecté.

Ainsi, en l'absence d'un actionnement de l'interrupteur, l'élément d'accumulation est déconnecté du connecteur, de sorte que l'établissement accidentel d'une liaison électrique entre deux plots du connecteur ne permet pas à lui seul une circulation de charges électriques entre les deux plots. Le raccordement de la batterie à l'équipement doit être réalisé lorsque le commutateur est dans son état passant à la suite d'un actionnement de l'interrupteur.

De préférence, le circuit électronique comprend un élément de temporisation pour maintenir le commutateur dans l'état passant pendant une durée prédéterminée après l'actionnement du bouton.

Ceci permet de laisser du temps à l'utilisateur pour le raccordement de la batterie à l'équipement.

Avantageusement, le circuit électronique comporte un dispositif indicateur d'état de charge auquel sont reliés un indicateur externe de l'état de charge et un interrupteur d'activation du dispositif indicateur, le bouton étant relié à l'interrupteur d'activation pour commander celui-ci dans son état passant.

Il n'est pas nécessaire de disposer d'un bouton dédié à la connexion des plots, le bouton ayant une fonction de commande directe de l'activation du dispositif indicateur de l'état de charge et une fonction de commande indirecte du commutateur de connexion de l'élément d'accumulation aux bornes de raccordement.

L'invention a également pour objet un ensemble équipement électrique et batterie d'alimentation électrique de l'équipement, l'équipement comportant un châssis comportant un logement pour la batterie et la batterie présentant les caractéristiques ci-dessus, le logement comportant une saillie interne pour actionner le bouton lors de la mise en place de la batterie dans le logement.

La connexion de l'élément d'accumulation aux bornes de raccordement est ainsi automatique à l'insertion de la batterie dans son logement.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1, selon une solution connue, montre un équipement E et une batterie B de type connu dans laquelle le raccordement électrique de l'élément d'accumulation aux plots de puissance est effectué via un circuit de sécurité CS (dont l'organe de coupure est le transistor Q1) et la détection de présence de l'équipement est réalisée via la résistance R1 et le comparateur MA1 ;
- la figure 2 est une vue en perspective d'une batterie conforme à l'invention,
- la figure 3 est une vue schématique de cette batterie,
- la figure 4 est une vue partielle en perspective d'un ensemble équipement et batterie conforme à l'invention.

En référence aux figures 2 à 4, la batterie conforme à l'invention, généralement désignée en 1, est destinée à l'alimentation d'un équipement électrique 100 comportant un châssis 101 pourvu d'un logement 102 dans lequel débouche un connecteur 103.

La batterie 1 comprend un boîtier 2 renfermant un élément d'accumulation d'énergie électrique 3 relié par deux conducteurs 4, 5 à un connecteur 6 de raccordement externe qui est fixé dans une ouverture du boîtier 2 pour être accessible depuis l'extérieur du boîtier 2 et qui est agencé pour coopérer avec le connecteur 103.

Le boîtier 1 reçoit en outre un circuit électronique 7 qui est relié à l'élément d'accumulation 3 pour être alimenté par celui-ci et qui est relié au connecteur 6 pour envoyer des informations relatives à la batterie à un circuit correspondant de l'équipement 100. Le circuit électronique 7 comporte notamment un organe de mesure 8 de paramètres de fonctionnement de l'élément d'accumulation 3 (comme la température et la tension), un organe de détection 9 d'un équipement électrique raccordé au connecteur 6 et un dispositif indicateur d'état de charge 10.

L'organe de détection 9 fonctionne par exemple en détectant sur deux plots du connecteur un signal de présence émis par le circuit de l'équipement 100.

Le dispositif indicateur 10 est relié à un interrupteur d'activation relié à un indicateur externe 12 de l'état de charge. L'interrupteur d'activation est commandé par un bouton poussoir 11, monté sur le boîtier 2 et accessible depuis l'extérieur de celui-ci. L'indicateur externe 12 est ici un indicateur visuel à diodes électroluminescentes dont l'allumage dépend de l'état de charge détecté.

La batterie 1 comporte au moins un commutateur statique 13, ici un transistor bipolaire, monté sur le conducteur 4 et le circuit électronique 7 est agencé pour commander le commutateur 13 dans un état passant lors d'une activation du dispositif indicateur 10 et tant qu'un équipement électrique 100 est détecté aux bornes du connecteur 6. Le circuit électronique 7 comprend un élément de temporisation 14 pour maintenir le commutateur 13 dans l'état passant pendant une durée prédéterminée après l'activation du dispositif indicateur 10.

Ainsi, lorsque l'utilisateur appuie sur le bouton poussoir 11, il visualise l'état de charge affiché sur l'indicateur externe 12 et dispose de la durée prédéterminée pour mettre en place la batterie 1 dans le logement 102. La mise en place correcte de la batterie dans le logement 102 entraîne la connexion du connecteur 6 au connecteur 103 et la détection de l'équipement 100 par l'organe de détection 9. Le circuit électronique 7 maintient alors le commutateur statique 13 dans son état passant tant que l'équipement 100 est détecté.

Lorsque la batterie 1 est ôtée de l'équipement 100 ou si après avoir enfoncé le bouton poussoir 11 l'utilisateur n'a pas mis en place la batterie 1 dans l'équipement 100, le circuit électronique 7 commande le commutateur statique 13 dans l'état bloqué.

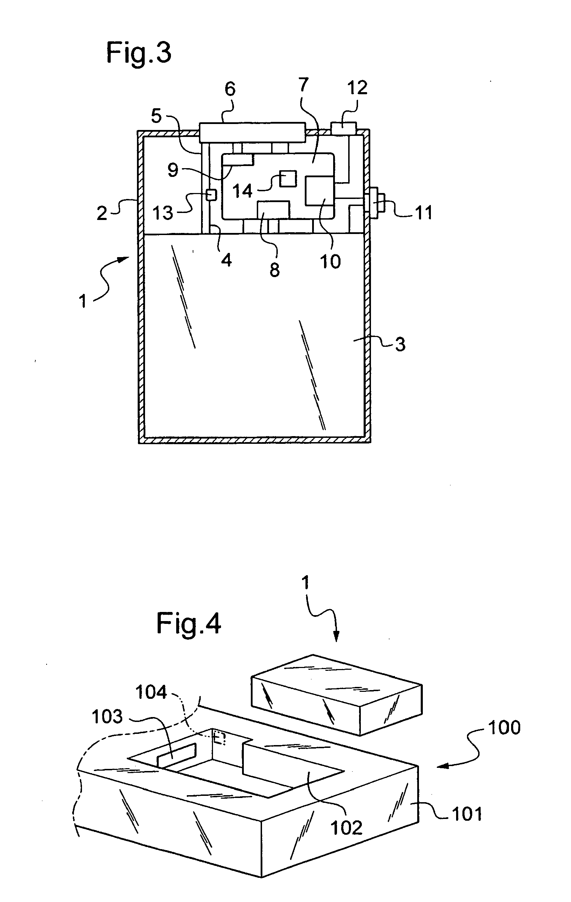

Il est possible de prévoir dans le logement 102 une saillie 104 (représentée en trait mixte double sur la figure 3) pour enfoncer le bouton poussoir 11 à la mise en place de la batterie 1 dans le logement 102. Ceci permet de se prémunir contre un oubli de l'utilisateur omettant d'appuyer sur le bouton poussoir 11 avant la mise en place de la batterie 1 dans l'équipement 100.

La saillie 104 peut être disposée à l'entrée du logement 102 pour que, lors de la mise en place de la batterie 1, le bouton poussoir 11 soit enfoncé par la saillie 104 avant d'échapper à celle-ci, la temporisation assurant le maintien du commutateur statique 13 dans son état passant le temps que la connexion se fasse.

En variante, si le circuit électronique 7 ne comporte pas d'élément de temporisation, la saillie 104 peut être positionnée pour enfoncer de façon permanente le bouton poussoir 11 tant que la batterie 1 est dans le logement 102.

Bien entendu, l'invention n'est pas limitée aux modes de réalisations décrits mais englobe toute variante entrant dans le champ de l'invention telle que définie par les revendications.

En particulier, l'invention est applicable à des batteries et des équipements mettant en oeuvre d'autres modes de raccordement, et par exemple un raccordement via un câble ayant une extrémité libre en saillie du châssis de l'équipement et pourvue d'un connecteur.

La batterie peut avoir une structure différente de celle décrite et par exemple comprendre plusieurs éléments d'accumulation ou un indicateur externe sonore.

L'indicateur externe peut être piloté pour, après avoir indiqué l'état de charge, décompter la durée restante pour connecter la batterie à l'équipement.

Le commutateur peut être commandé par un bouton dédié ou par tout autre bouton qui est présent sur la batterie pour offrir également une autre fonctionnalité.

## Revendications

1. Batterie (1) comportant un boîtier (2) renfermant au moins un élément d'accumulation (3) d'énergie électrique, un connecteur de raccordement externe (6) qui est relié par au moins deux conducteurs (4, 5) à l'élément d'accumulation et qui débouche à l'extérieur du boîtier, et un circuit électronique (7) qui est relié à l'élément d'accumulation et qui comporte un organe de détection (9) d'un équipement électrique raccordé au connecteur, **caractérisé en ce que** la batterie comporte au moins un commutateur (13) monté sur un des conducteurs et un bouton monté sur le boîtier et accessible depuis l'extérieur de celui-ci, et **en ce que** le circuit électronique (7) est agencé pour commander le commutateur dans un état passant lors d'un actionnement du bouton et tant qu'un équipement électrique est détecté.

2. Batterie selon la revendication 1, dans laquelle le circuit électronique (7) comprend un élément de temporisation (14) pour maintenir le commutateur (13) dans l'état passant pendant une durée prédéterminée après l'actionnement du bouton.

3. Batterie selon la revendication 1, dans lequel le circuit électronique comporte un dispositif indicateur d'état de charge (10) auquel sont reliés un indicateur externe (12) de l'état de charge et un interrupteur d'activation (11) du dispositif indicateur, le bouton étant relié à l'interrupteur d'activation pour commander celui-ci dans son état passant.

4. Ensemble équipement électrique (100) et batterie (1) d'alimentation électrique de l'équipement, l'équipement comportant un châssis (101) comportant un logement (102) pour la batterie et la batterie étant conforme à la revendication 1, le logement comportant une saillie interne (104) pour actionner le bouton lors de la mise en place de la batterie dans le logement.

## Patentansprüche

1. Batterie (1), umfassend ein Gehäuse (2), das mindestens ein Speicherelement (3) zum Speichern elektrischer Energie umschließt, einen äußeren Verbindungsanschluss (6), der über mindestens zwei Leitungen (4, 5) mit dem Speicherelement verbunden ist und an der Außenseite des Gehäuses mündet, sowie eine elektronische Schaltung (7), die mit dem Speicherelement verbunden ist und ein Erfassungsorgan (9) zum Erfassen einer elektrischen Ausrüstung umfasst, die an den Anschluss angeschlossen ist, **dadurch gekennzeichnet, dass** die Batterie mindestens einen Schalter (13) umfasst, der an einer der Leitungen angebracht ist, sowie einen Knopf, der an dem Gehäuse angebracht und von dessen Außenseite zugänglich ist, und dass die elektronische Schaltung (7) so ausgebildet ist, dass sie den Schalter in einen Durchlasszustand schaltet, wenn der Knopf betätigt und solange eine elektrische Ausrüstung erfasst wird.

2. Batterie nach Anspruch 1, wobei die elektronische Schaltung (7) ein Zeitschaltelement (14) umfasst, um den Schalter (13) für eine vorgegebene Zeitdauer nach der Betätigung des Knopfes im Durchlasszustand zu halten.

3. Batterie nach Anspruch 1, wobei die elektronische Schaltung eine Anzeigevorrichtung (10) zur Anzeige des Ladezustands umfasst, an die ein externer Anzeiger (12) zum Anzeigen des Ladezustands und ein Aktivierungsschalter (11) für die Anzeigevorrichtung angeschlossen sind, wobei der Knopf mit dem Aktivierungsschalter verbunden ist, um diesen in seinen Durchlasszustand zu schalten.

4. Einheit aus elektrischer Ausrüstung (100) und Batterie (1) zur elektrischen Versorgung der Ausrüstung, wobei die Ausrüstung einen Rahmen (101) umfasst, der eine Aufnahme (102) für die Batterie umfasst, und die Batterie gemäß Anspruch 1 ausgebildet ist, wobei die Aufnahme einen inneren Vorsprung (104) umfasst, der dazu bestimmt ist, den Knopf beim Einsetzen der Batterie in die Aufnahme zu betätigen.

## Claims

1. A battery (1) comprising a housing (2) containing at least one electrical storage element (3), an external connector (6) that is connected by at least two conductors (4, 5) to the storage element and that leads to the outside of the housing, and an electronic circuit (7) that is connected to the storage element and that includes a detector element (9) for detecting electrical equipment connected to the connector, the battery being **characterized in that** it includes at least one switch (13) mounted on one of the conductors, and a button mounted on the housing and accessible from outside it, and **in that** the electronic circuit (7) is arranged to control the switch so that it takes up a conductive state while the button is actuated and so long as electrical equipment is detected.

2. A battery according to claim 1, wherein the electronic circuit (7) includes a timer element (14) for keeping the switch (13) in the conductive state for a predetermined duration after the button has been actuated.

3. A battery according to claim 1, wherein the electronic circuit includes a state-of-charge indicator device (10) connected to an external state-of-charge indicator (12) and an activation switch (11) for activating the indicator device, the button being connected to the activation switch for causing it to occupy its conductive state.

4. An assembly comprising electrical equipment (100) and an electrical power supply battery (1) for the equipment, the equipment comprising a structure (101) including a housing (102) for the battery, and the battery being in accordance with claim 1, the housing having an internal projection (104) for actuating the button while the battery is being put into place in the housing.
